# EUROPÄISCHE PATENTANMELDUNG

(11) **EP 2 324 970 A1**
(43) Veröffentlichungstag der Anmeldung: **25.05.2011**
(21) Anmeldenummer: 10191355.6
(22) Anmeldetag: 16.11.2010
(51) Int. Cl.: B25J 15/06, B65G 47/91, B65H 3/08

(54) **Flächensauggreifer**

(30) Priorität: 24.11.2009 DE 102009047091
(71) Anmelder: J. Schmalz GmbH, 72293 Glatten (DE)
(72) Erfinder: Schaaf, Walter, Dr., 72250 Freudenstadt-Grüntal (DE)
(74) Vertreter: Dreiss

(57) **Zusammenfassung**

Die Erfindung betrifft einen Flächensauggreifer (10) mit einem Greiferträger (14), an dem eine flächige, einen Deckel (18) und einen Saugboden (22) aufweisende, eine Saugkammer bildende Saugplatte (12) vorgesehen ist, wobei der Deckel (18) am Greiferträger (14) befestigt und der Saugboden (22) einem anzusaugenden Gegenstand zugewandt ist, und Deckel (18) und Saugboden (22) an wenigstens einer Seite formschlüssig ineinander greifen und ineinander schiebbare Verbindungsmittel aufweisen, die sich parallel zur Greifebene erstrecken und von einer Nut (28) und einer in die Nut (28) einschiebbaren Feder (50) gebildet werden.

## Beschreibung

Die Erfindung betrifft einen Flächensauggreifer mit den Merkmalen des Oberbegriffs des Anspruchs 1.

Es sind aus einem Strangpressprofil hergestellte Flächensauggreifer bekannt, bei denen der Deckel und der Saugboden zur Bildung/Begrenzung der Saugkammer miteinander verschraubt werden. Ist der Saugboden, der am anzusaugenden Objekt anliegt, z.B. verschlissen oder beschädigt, muss die Verschraubung gelöst werden, um den Saugboden austauschen zu können. Dies ist unter anderem zeitaufwändig.

Der Erfindung liegt die Aufgabe zugrunde, einen Flächensauggreifer bereitzustellen, der servicefreundlicher ist.

Diese Aufgabe wird mit einem Flächensauggreifer gelöst, der die Merkmale des Anspruchs 1 aufweist.

Erfindungsgemäß werden der Deckel und der Saugboden ineinander geschoben. Hierfür weist das eine Bauteil eine Nut auf, in welche der Rand des anderen Bauteil eingeschoben werden kann. Hierdurch werden die Vorteile erzielt, dass der Flächensauggreifer nicht nur leichter ist, sondern auch niedriger baut und schneller montierbar ist, z.B. keine Verschraubungen gelöst werden müssen.

Weitere Vorteile, Merkmale und Einzelheiten der Erfindung ergeben sich aus den Unteransprüchen sowie der nachfolgenden Beschreibung, in der unter Bezugnahme auf die beigefügte Zeichnung ein besonders bevorzugtes Ausführungsbeispiel beschrieben ist. Dabei können die in der Zeichnung dargestellten sowie in der Beschreibung und in den Ansprüchen erwähnten Merkmale jeweils im Einzelnen als auch in beliebiger Kombination erfindungswesentlich sein.

In der Zeichnung zeigen:
- Figur 1: eine perspektivische Ansicht eines Flächensauggreifers mit Saugplatte und Zusatzelemente;
- Figur 2: eine Ansicht auf die Unterseite des Flächensauggreifers gemäß Figur 1;
- Figur 3: die Saugplatte mit Deckel und abgenommenem Saugboden; und
- Figur 4: die gefügte Saugplatte.

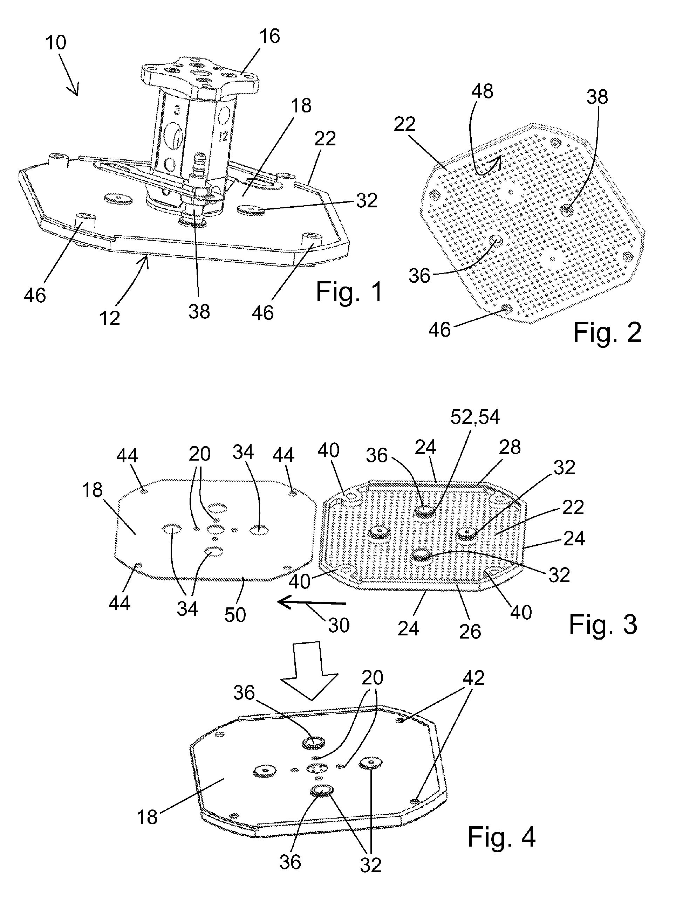

Die Figur 1 zeigt eine perspektivische Ansicht eines insgesamt mit 10 bezeichneten Flächensauggreifers z.B. für eine Vorrichtung zum Habungen von Werkstücken mittels Vakuum. Der Flächensauggreifer 10 weist eine Saugplatte 12 auf, welche an einem Greiferträger 14 befestigt ist, der seinerseits z.B. an einem (nicht dargestellten) Roboterarm montiert ist. Der Greiferträger 14 weist hierfür einen Flansch 16 auf. Das dem Flansch 16 gegenüber liegende Ende des Greiferträgers 14 ist an einem Deckel 18 befestigt, der hierfür Befestigungsöffnungen 20 aufweist, die in Figur 3 dargestellt sind. Der Deckel 18 stellt einen Träger für einen Saugboden 22 dar, der auf den Deckel 18 formschlüssig aufgeschoben ist und zwischen sich und dem Deckel 18 eine Saugkammer bildet. Hierfür weist der Saugboden 22 an drei seiner Seitenkanten 24 einen in Richtung des Deckels 18 abragenden Rand 26 auf, der an seiner Innenseite mit einer Nut 28 versehen ist, die sich parallel zur Ebene des Deckels 18 erstreckt. Die Abmessungen des Randes 26 und der Nut 28 sind so gewählt, dass der Rand des Deckels 18 in die Nut 28 des umlaufenden Randes 26 einschiebbar ist, bzw. der Saugboden 22 in Richtung des Pfeils 30 auf den Deckel 18 aufschiebbar ist. Der Rand der Deckels 18 bildet somit eine Feder 50. Diese gefügte Saugplatte 12 ist in Figur 4 dargestellt.

In der Figur 3 ist noch erkennbar, dass der Saugboden 22 an seiner Innenseite abstehende Dome 32 aufweist, die zur Befestigung und Sicherung des Saugbodens 22 am Deckel 18 dienen. Die Dome 32 überragen die durch die Nute 28 gebildete Einschubebene für den Deckel 18, so dass sie mit ihrem freien Ende Aufnahmeöffnungen 34 im Deckel 18 durchgreifen. Die Dome sind 32 unmittelbar unterhalb dieser Ebene aufgedickt, so dass sie den Deckel 18 abstützen. Weitere Abstützelemente 40 für den Deckel 18, die auch die Höhe der Saugkammer definieren, befinden sich in den Eckbereichen des Saugbodens 22, die mit Aufnahmeöffnungen 42 versehen sind. In diese Aufnahmeöffnungen 42, die bei gefügter Saugplatte 12 mit Durchgangsöffnungen 44 im Deckel 18 fluchten, sind Aufpralldämpfer 46 eingesetzt, die die gelochte Unterseite 48 des Saugbodens 22 überragen. In den Aufnahmeöffnungen 42 können auch Sensoren oder dergleichen befestigt werden.

Die Dome 32 können mit Durchgangsöffnungen 36 versehen sein, so dass z.B. ein Sensor 38 angeschlossen werden kann. Außerdem kann der Dom 32 an seinem freien Ende eine Nut 52 für ein Befestigungselement, z.B. einen O-Ring, einen Sprengring oder dergleichen, oder einen die Aufnahmeöffnung 34 hintergreifenden Wulst 54 aufweisen, so dass er mit der Aufnahmeöffnung 34 verrastet.

Bei beschädigtem oder verschlissenem Saugboden 22 wird dieser lediglich von den Domen 32 entrastet und vom Deckel 18 abgezogen. Gegebenenfalls müssen zuvor noch Aufpralldämpfer 46 und Sensoren 38 entfernt werden.

## Patentansprüche

1. Flächensauggreifer (10) z.B. für einen Greiferträger (14), an dem eine flächige, einen Deckel (18) und einen Saugboden (22) aufweisende, eine Saugkammer bildende Saugplatte (12) vorgesehen ist, wobei der Deckel (18) oder Saugboden (22) am Greiferträger (14) befestigt und der Saugboden (22) oder Deckel (18) einem anzusaugenden Gegenstand zugewandt ist, wobei Deckel (18) und Saugboden (22) an wenigstens einer Seite formschlüssig ineinander greifen, **dadurch gekennzeichnet, dass** Deckel (18) und Saugboden (22) ineinander schiebbare Verbindungsmittel aufweisen, die sich parallel zur Greifebene erstrecken und von einer Nut (28) und einer in die Nut (28) einschiebbaren Feder (50) gebildet werden.

2. Flächensauggreifer nach Anspruch 1, **dadurch gekennzeichnet, dass** Deckel (18) und Saugboden (22) an zwei, insbesondere einander gegenüber liegenden Seiten (24) formschlüssig ineinander greifen

3. Flächensauggreifer nach einem der vorhergehenden Ansprüche, **dadurch gekennzeichnet, dass** der Saugboden (22) an drei seiner Seitenkanten (24) einen in Richtung zum Deckel (18) abragenden Rand (26) aufweist, an dem auf der radialen Innenseite eine umlaufende Nut (28) vorgesehen ist.

4. Flächensauggreifer nach einem der vorhergehenden Ansprüche, **dadurch gekennzeichnet, dass** der Deckel (18) einen flächigen Rand aufweist, der als Feder (50) für die Nut (28) dient.

5. Flächensauggreifer nach einem der vorhergehenden Ansprüche, **dadurch gekennzeichnet, dass** auf der dem Deckel (18) zugewandten Seite des Saugbodens (22) oder auf der dem Saugboden (22) zugewandten Seite des Deckels (18) wenigstens ein abragender Dom (32) vorgesehen ist.

6. Flächensauggreifer nach Anspruch 5, **dadurch gekennzeichnet, dass** der Dom (32) in eine im Deckel (18) oder Saugboden (22) vorhandene Aufnahmeöffnung (34) eingreift und in dieser einrastet.

7. Flächensauggreifer nach Anspruch 5 oder 6, **dadurch gekennzeichnet, dass** der Dom (32) an seinem freien Ende
- eine Nut (52) für ein Befestigungselement, z.B. einen O-Ring, einen Sprengring oder dergleichen, oder
- einen die Aufnahmeöffnung hintergreifenden Wulst (54) aufweist.

8. Flächensauggreifer nach Anspruch 6 oder 7, **dadurch gekennzeichnet, dass** die Aufnahmeöffnung (34) in der Ebene des Deckels (18) oder Saugbodens (22) liegt oder die Aufnahmeöffnung (34) in Richtung des Doms (32) eingesenkt oder abgekröpft ist.

9. Flächensauggreifer nach einem der vorhergehenden Ansprüche, **dadurch gekennzeichnet, dass** den Ansaugvorgang überwachende Sensoren (38), z.B. Abstandssensoren, Drucksensoren, Strömungssensoren, und/oder eine Abblasvorrichtung vorgesehen ist.

10. Flächensauggreifer nach einem der vorhergehenden Ansprüche, **dadurch gekennzeichnet, dass** am Saugboden (22) oder Deckel (18) Elemente zur Aufpralldämpfung (46) beim Ansaugen des Objekts vorgesehen sind.

11. Flächensauggreifer nach einem der vorhergehenden Ansprüche, **dadurch gekennzeichnet, dass** am Deckel (18) oder Saugboden (22) ein Vakuumerzeuger, insbesondere ein druckluftbetriebener Ejektor, befestigt ist und der Vakuumerzeuger insbesondere im Greiferträger (14) integriert ist.
